# EUROPEAN PATENT SPECIFICATION

(11) **EP 3 805 743 B1**
(45) Date of publication and mention of the grant of the patent: **19.07.2023**
(21) Application number: 20799321.3
(22) Date of filing: 26.02.2020
(51) Int. Cl.: H01M 10/42, G01N 23/20025, G01N 23/205, H01M 10/48

(54) **BATTERY MEASUREMENT APPARATUS USING X-RAYS**
GERÄT ZUR BATTERIEMESSUNG MITTELS RÖNTGENSTRAHLEN
APPAREIL DE MESURE DE BATTERIE UTILISANT DES RAYONS X

(30) Priority: 30.04.2019 KR 20190050425; 23.12.2019 KR 20190172991
(43) Date of publication of application: 14.04.2021
(73) Proprietor: LG Energy Solution, Ltd., Seoul 07335 (KR)
(72) Inventor: KIM, So Young, Daejeon 34122 (KR); KOO, Japil, Daejeon 34122 (KR)
(74) Representative: Goddar, Heinz J.
(86) International application number: PCT/KR2020/002712
(87) International publication number: WO 2020/222413

(56) References cited:
- EP-A1- 3 460 893
- CN-A- 105 390 762
- JP-A- 2012 159 311
- JP-A- 2016 170 093
- JP-A- 2017 072 530
- JP-B2- 6 406 077
- KR-A- 20150 047 796

## Description

### TECHNICAL FIELD

The present invention is for analyzing the behavior of active materials in a battery in a state where the battery is actually operating in order to check the performance of the active materials, and more particularly, relates to a battery measurement apparatus using X-rays for measuring the battery by transmitting X-rays through the battery.

### BACKGROUND

In general, a secondary battery is a battery that can be used repetitively through a discharging process for converting chemical energy into electrical energy and a reverse charging process, and types of such secondary batteries include nickel-cadmium (Ni-Cd) batteries, nickel-metal hydride (Ni-MH) batteries, lithium-metal batteries, lithium-ion (Li-ion) batteries, lithium-ion polymer batteries (Li-ion Polymer Battery), and so on. Of these secondary batteries, secondary lithium batteries have been commercialized and widely used because of their high energy density and voltage, a long cycle-life, and a low self-discharge rate.

Active materials in a battery are materials that actually participate in the reactions at battery electrodes, and the performance of a battery, such as battery capacity and voltage, or the like, may be determined by the performance of the active materials. Therefore, it is important to analyze the active materials in a battery to interpret the performance of the battery.

Measuring a battery using X-rays may be one of the methods for measuring active materials in the battery. The measurement of a battery may be performed while changing various conditions such as charging and discharging, temperature, voltage, and the like. In such a case, a gas may be generated in the battery, and if the gas generation causes a voltage drop, a pouch swelling phenomenon, or the like, errors may occur in the measurement.

In order to prevent such a phenomenon, a jig for pressing a battery may be used. However, jigs were required to have the form that conforms to the dimensions and shapes corresponding to the types of secondary batteries sold for a variety of purposes (EV, ESS, cell phone, etc.). In other words, since secondary batteries have diverse dimensions such as surface area, thickness, and so on, it was necessary to replace the jig each time the shape and dimensions of the secondary battery to be inspected are changed in the conventional apparatus.

Korean Patent Registration No. 10-1274730 discloses a technique for "In-situ Battery Frame Capable of X-ray Diffraction Analysis."
EP 3 460 893 A1 relates to a device for clamping planar samples, in particular pouch battery cells, for X-ray diffractometry, wherein the device has: a housing comprising a sample holder which has holding elements which can be braced against one another in order to clamp the sample; at least two X-ray windows for letting in and letting out X-rays; and at least one first temperature-control device for controlling the temperature of the sample. At least one first temperature-control device is attached to each of the holding elements, wherein the first temperature-control devices are thermally coupled to the housing, and the device has at least one second temperature-control device which is designed to dissipate heat, which is emitted from the first temperature-control device to the housing, from the housing to the outside and/or to introduce heat from outside into the housing.
The invention is defined in independent claim 1. Embodiments of the invention are defined in the dependent claims.

### SUMMARY OF INVENTION

### TECHINCL OBJECTS

The present invention is designed to analyze the behavior of active materials in a battery in a state where the battery is actually operating in order to check the performance of the active materials, and more particularly, to provide a battery measurement apparatus using X-rays for measuring the battery by transmitting X-rays through the battery.

The objects sought to be achieved by the present invention are not limited to those set forth above, and other objects that have not been mentioned above will be clearly understood by those having ordinary skill in the art to which the present invention pertains from the following description.

### TECHNICAL SOLUTION

A battery measurement apparatus using X-rays in accordance with the present invention, when one face of a battery is defined as a first battery face and the other face of the battery opposite the first battery face is defined as a second battery face, the battery measurement apparatus may comprise:, a first plate for making contact with the first battery face and pressing the battery; a second plate for making contact with the second battery face and supporting the battery; and a pressing unit for pressing the first plate toward the second plate, wherein the first plate may be provided with a first hole formed therein through which X-rays pass, the second plate may be provided with a second hole formed therein through which X-rays pass, and the first hole and the second hole may be formed at positions facing each other.

### EFFECTS OF THE INVENTION

The battery measurement apparatus using X-rays in accordance with the present invention can be applied to an X-ray measurement system, and more specifically, can be coupled to a battery to suppress changes in the battery due to the internal gas generated in the battery. In addition, the battery measurement apparatus using X-rays can press the battery by making contact with only one face and the other face opposite the one face of the battery, and therefore be coupled to the battery regardless of its size.

Since the battery measurement apparatus using X-rays in accordance with the present invention only needs to press the required area, it is possible to make contact with and press only part of the surface area of a battery. Therefore, even when a jig is coupled to the battery, the battery can still have exposed areas that are not coupled with the jig, and these exposed areas can be used to connect accessory parts such as a heat-insulating material, a heater, a charge and discharge terminal, and so on, for various analyses.

### BRIEF DESCRIPTION OF THE DRAWINGS

Fig. 1 is a conceptual diagram schematically showing an X-ray measurement system;
Fig. 2 is a perspective view showing a battery measurement apparatus using X-rays in accordance with the present invention;
Fig. 3 is a front view showing the battery measurement apparatus using X-rays in accordance with the present invention;
Fig. 4 is a rear view showing the battery measurement apparatus using X-rays in accordance with the present invention;
Fig. 5 is a plan view showing a state in which an auxiliary pressing unit is separated from a first plate and a second plate; and
Fig. 6 is a plan view showing a state in which the auxiliary pressing unit is coupled to the first plate and the second plate.

### DETAILED DESCRIPTION OF EMBODIMENTS

A battery measurement apparatus using X-rays in accordance with the present invention, when one face of a battery is defined as a first battery face and the other face of the battery opposite the first battery face is defined as a second battery face, the battery measurement apparatus may comprise: a first plate for making contact with the first battery face and pressing the battery; a second plate for making contact with the second battery face and supporting the battery; and a pressing unit for pressing the first plate toward the second plate, wherein the first plate may be provided with a first hole formed therein through which X-rays pass, the second plate may be provided with a second hole formed therein through which X-rays pass, and the first hole and the second hole may be formed at positions facing each other.

In the battery measurement apparatus using X-rays in accordance with the present invention, materials of the first plate and the second plate may comprise one or more of Al and SUS, the first plate and the second plate may have a thickness of 5 mm to 15 mm, and the first hole and the second hole may have a longitudinal width of 15 mm to 30 mm and a transverse width of 5 mm to 25 mm.

In the battery measurement apparatus using X-rays in accordance with the present invention, when one face of the first plate for making contact with the battery is defined as a second face, the other face of the first plate opposite the second face is defined as a first face, one face of the second plate for making contact with the battery is defined as a third face, and the other face of the second plate opposite the third face is defined as a fourth face, the pressing unit may comprise: a pressing means for pressing the first face of the first plate to thereby cause the second face of the first plate to press the battery; a guide plate positioned on the first face side of the first plate and provided with a guide hole into which the pressing means is inserted and guided; and a fixing plate with one end thereof coupled to the second plate and the other end thereof coupled to the guide plate, for fixing the second plate and the guide plate parallel to each other while being spaced apart from each other.

In the battery measurement apparatus using X-rays in accordance with the present invention, a separation distance between the second plate and the guide plate may be 10 mm to 30 mm.

In the battery measurement apparatus using X-rays in accordance with the present invention, the first plate may be disposed between the guide plate and the second plate so that an edge of one end of the first plate makes contact with a surface of the fixing plate.

The battery measurement apparatus using X-rays in accordance with the present invention, may further comprise an auxiliary pressing unit for pressing the first plate and the second plate into close contact with the battery in a position different from that of the pressing unit.

In the battery measurement apparatus using X-rays in accordance with the present invention, the auxiliary pressing unit may comprise: a second auxiliary plate for making contact with the fourth face of the second plate and thereby supporting the second plate; a first auxiliary plate facing the first face of the first plate on the first face side; an auxiliary pressing means for insertion into an auxiliary guide hole provided in the first auxiliary plate and for pressing the first plate toward the battery; and a column portion with one end thereof coupled to the first auxiliary plate and the other end thereof coupled to the second auxiliary plate, for fixing the first auxiliary plate and the second auxiliary plate parallel to each other while being spaced apart from each other.

In the battery measurement apparatus using X-rays in accordance with the present invention, a separation distance between the first auxiliary plate and the second auxiliary plate may be 15 mm to 45 mm.

In the battery measurement apparatus using X-rays in accordance with the present invention, one end of the pressing means and one end of the auxiliary pressing means may make contact with and press the first plate, and an imaginary straight line connecting the point where the pressing means makes contact with the first plate and the point where the auxiliary pressing means makes contact with the first plate may pass through the first hole.

### EMBODIMENTS

Hereinafter, embodiments in accordance with the present invention will be described in detail with reference to the accompanying drawings. During this course of description, the sizes or shapes of the components shown in the drawings may not be made to scale for clarity and convenience of description. In addition, terms that are specifically defined in consideration of the construction and operation of the present invention may vary depending on the convention or intention of a user or operator. Definition of these terms should be made based on the overall contents of the present disclosure.

In the description of the present invention, it should be noted that the orientation or positional relationship indicated by the terms "central,""up,""down,""left,""right,""vertical,""horizontal,""inward,""outward," etc. are based on the orientation or positional relationship shown in the drawings, or the orientation or positional relationship that is normally presented when using the product of the present invention, and are only for the purpose of explanation and brief description of the invention, and that it is not intended to present or suggest that the apparatus or elements shown must have a specific orientation and be constructed or operated in the specific orientation, and accordingly, it should not be understood to limit the present invention.

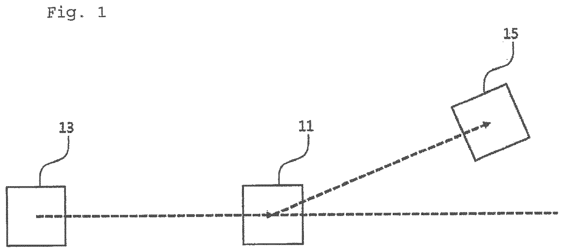

Hereinafter, the construction and functions of a battery measurement apparatus using X-rays in accordance with the present invention will be described in detail, with reference to Figs. 1 to 6.

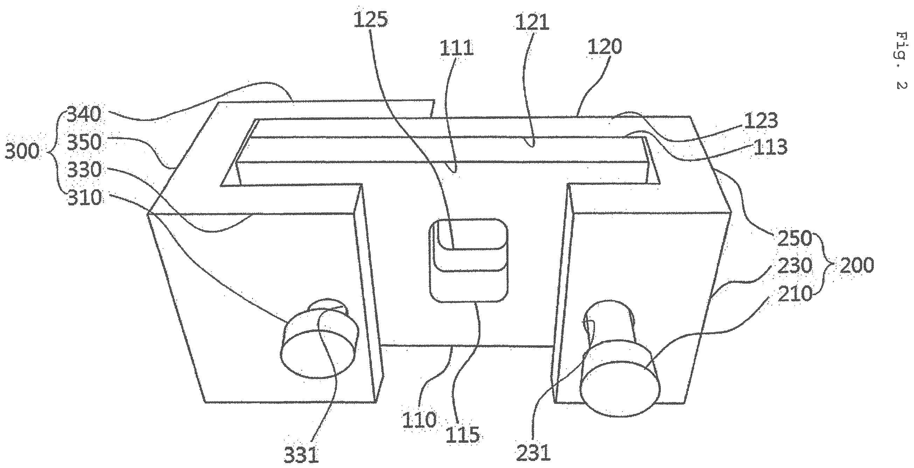

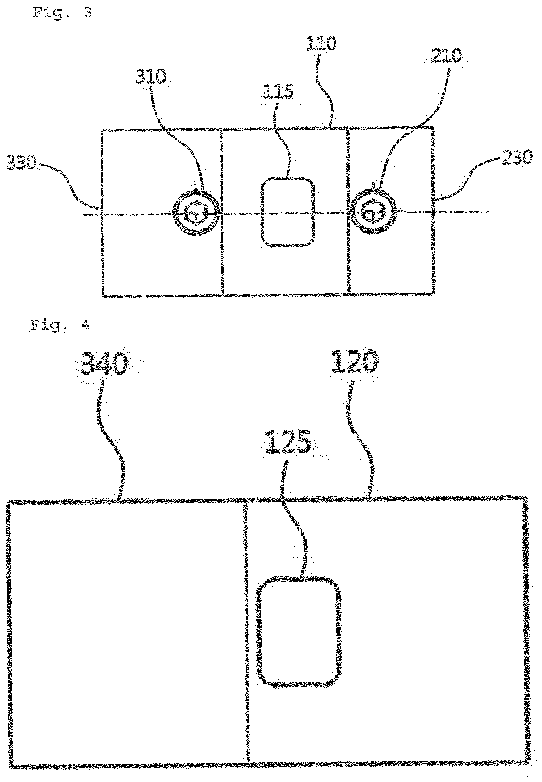

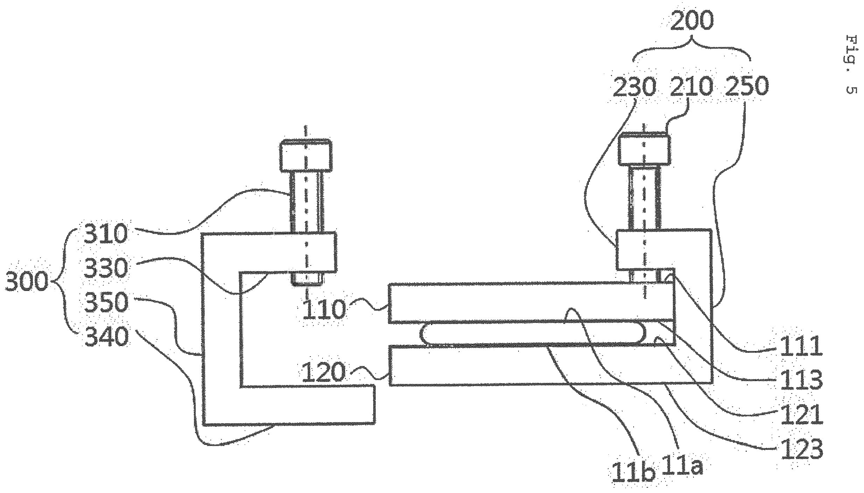

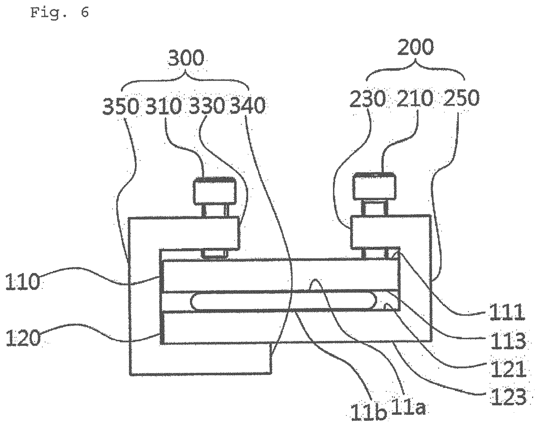

Fig. 1 is a conceptual diagram schematically showing an X-ray measurement system. Fig. 2 is a perspective view showing a battery measurement apparatus using X-rays in accordance with the present invention. Fig. 3 is a front view showing the battery measurement apparatus using X-rays in accordance with the present invention. Fig. 4 is a rear view showing the battery measurement apparatus using X-rays in accordance with the present invention. Fig. 5 is a plan view showing a state in which an auxiliary pressing unit 300 is separated from a first plate 110 and a second plate 120. Fig. 6 is a plan view showing a state in which the auxiliary pressing unit 300 is coupled to the first plate 110 and the second plate 120.

As illustrated in Fig. 1, a system to which the battery measurement apparatus using X-rays in accordance with the present invention is applied may irradiate a battery 11 with X-rays by an X-ray light source 13, and receive the X-rays transmitted through the battery 11at a light receiving unit 15 to thereby analyze the battery 11.For example, in the 2theta scan measurement method, X-rays with a wavelength of 0.56 Å for the analysis of the battery 11 may be used to measure the 2theta range in an effective range. The light receiving unit 15 may measure in a range of 5° to 25° of a diffraction angle.

The battery 11 to be analyzed may include an electrode assembly and a flexible pouch casing for housing the electrode assembly therein. In the analysis of the battery 11, an X-ray measurement system may analyze the battery 11 in various states while changing variables such as charging and discharging, temperature, voltage, and so on. In the case of the flexible pouch casing, a gas may be generated in the electrode assembly while the state of the battery 11 changes, and the gas thus generated may expand the pouch casing, thereby interfering with the analysis of the battery 11.

The battery measurement apparatus using X-rays in accordance with the present invention may be applied to the X-ray measurement system, and more specifically, may be coupled to the battery 11 to suppress changes in the battery 11 due to the internal gas generated in the battery 11.In addition, the battery measurement apparatus using X-rays may press the battery 11 by making contact with only one face and the other face opposite the one face of the battery 11, and therefore be coupled to the battery 11 regardless of the size of the battery 11.

For the following description, one face of the battery 11 is defined as a first battery face 11a, and the other face of the battery 11 opposite the first battery face 11a is defined as a second battery face 11b.

As shown in Fig. 2, the battery measurement apparatus using X-rays in accordance with the present invention may comprise a first plate 110 for making contact with the first battery face 11a and pressing the battery 11, a second plate 120 for making contact with the second battery face 11b and supporting the battery 11, and a pressing unit 200 for pressing the first plate 110 toward the second plate 120. In other words, the battery measurement apparatus using X-rays in accordance with the present invention may be in a state in which the first plate 110 and the second plate 120 make contact with and press only the two opposite faces of the battery 11, and the surfaces of the battery 11 other than the faces pressed by the first plate 110 and the second plate 120 are exposed to the outside. Therefore, the dimensions of the battery 11, except for the faces in contact with the first plate 110 and the second plate 120, may not be limited.

It may be desirable for the first plate 110 and the second plate 120 not to transmit X-rays of short wavelengths in regions other than a first hole 115 and a second hole 125.Therefore, it may be desirable for the first plate 110 and the second plate 120 to be made of a metallic material with high density. In addition, it may be desirable for the first plate 110 and the second plate 120 to have excellent properties such as heat resistance, heat dissipation, rigidity, and the like, for use in various analysis environments. Accordingly, the first plate 110 and the second plate 120 may be a metal including one or more of Al and SUS. The first plate 110 and the second plate 120 may have a thickness of 5 mm to 15 mm. Materials such as Al, SUS, and the like can effectively block X-rays of short wavelengths, with a thickness of 5 mm to 15 mm.

The first plate 110 may be provided with a first hole 115 formed therein through which X-rays pass, the second plate 120 may be provided with a second hole 125 formed therein through which X-rays pass, and the first hole 115 and the second hole 125 may be formed at positions facing each other. For example, the first hole 115 and the second hole 125 may be formed in a square shape as illustrated in Figs. 3 and 4. In the system to which the battery measurement apparatus using X-rays in accordance with the present invention is applied, the X-ray light source 13 can irradiate a line beam having a length of 20 mm. The transverse and longitudinal lengths of the first hole 115 and the second hole 125 may be determined at a level that does not deteriorate the length of the line beam, wavelengths of the X-rays, measurement methods, effective ranges, and the pressing capability. In other words, if the sizes of the first hole 115 and the second hole 125 are smaller, the pressing capability may be excellent, but there may be difficulty in the measurement, and if the sizes are larger, the interferences in the measurement caused by the first plate 110 and the second plate 120 may be reduced, but the pressing capability may be lowered. Therefore, the sizes of the first hole 115 and the second hole 125 may be defined at an appropriate level.

Specifically, in order to advantageously obtain an effective 2theta range (2theta of 5° to 25°) in the 2theta scan measurement method when the wavelength of the X-rays is less than 0.6 Å, the longitudinal width of the first hole 115 and the second hole 125 may be 15 mm to 30 mm. The transverse width may be preferably similar to the width of the line beam irradiated from the X-rays, and may be 5 mm to 25 mm. For example, the first hole 115 and the second hole 125 may be formed with a longitudinal length of 20 mm and a transverse length of 15 mm.

For description, one face of the first plate 110 for making contact with the battery 11 is defined as a second face 113, the other face of the first plate 110 opposite the second face 113 is defined as a first face 111, one face of the second plate 120 for making contact with the battery 11 is defined as a third face 121, and the other face of the second plate 120 opposite the third face 121 is defined as a fourth face 123.

As shown in Figs. 5 and 6,the pressing unit 200 may comprise a pressing means 210 for pressing the first face of the first plate 110 to thereby cause the second face 113 of the first plate 110 to press the battery 11, a guide plate 230 positioned on the first face 111 side of the first plate 110 and provided with a guide hole 231 into which the pressing means 210 is inserted and guided, and a fixing plate 250 with one end thereof coupled to the second plate 120 and the other end thereof coupled to the guide plate 230, for fixing the second plate 120 and the guide plate 230 parallel to each other while being spaced apart from each other.

In other words, the second plate 120 and the guide plate 230 may be parallel to each other and fixed to the fixing plate 250, and the coupled shape of the second plate 120, the guide plate 230, and the fixing plate 250 may be a'□' shape as shown in Figs. 5 and 6. The guide plate 230, the first plate 110, the battery 11, and second plate 120 may be stacked in this order, and of these, the guide plate 230, the second plate 120, and the fixing plate 250 may be manufactured as one body. The pressing means 210 may apply a force in a direction in which the first plate 110 moves closer to the second plate 120 in a state where the application point of the force for pressing is located on the guide plate 230.Therefore, the guide hole 231 may also be formed to guide the pressing means 210 in a direction perpendicular to the first battery face 11a. For example, the pressing means 210 may be a bolt. Threads may be formed on the inner circumferential surface of the guide hole 231, and the pressing means 210 may be fastened to the guide hole 231 by screw connection. Specifically, the pressing means 210 may be coupled with the guide hole 231 via screw connection by receiving a force with a torque wrench. The torque wrench may apply a force of 0 kgfcm to 10 kgfcm or lower or a force of5 kgfcm to 6 kgfcm to the pressing means 210,thereby coupling the pressing means 210 and the guide hole 231 with each other via screw connection.

In other words, the pressing means 210 may be inserted further into the guide hole 231 as the pressing means 210 rotates, the pressing means 210 may extend from the face opposite to the face of the guide plate 230 into which the pressing means 210 is inserted, and the extended end of the pressing means 210 may press the first plate 110.

The separation distance between the second plate 120 and the guide plate 230 may be 10 mm to 30 mm. The lower limit of the distance between the second plate 120 and the guide plate 230 may be set by taking into account the thickness of the first plate 110 and that of the battery 11. Although there is no limitation on the upper limit thereof, it may be considered at the level for preventing the apparatus from being unnecessarily large.

The first plate 110 may be disposed between the guide plate 230 and the second plate 120 so that the edge of one end of the first plate 110 may make contact with the surface of the fixing plate 250.The edge of one end of the first plate 110 may be one of the edges of the first face 111 or the second face 113, and may be an edge that extends further towards the periphery or the portion that extends furthest towards the periphery In order for the X-rays outputted from the X-ray light source 13 to reach the light receiving unit 15, the first hole 115 and the second hole 125 must be aligned. Therefore, the first plate 110 may always have to press in position on the basis of the second plate 120.By aligning the first plate 110 in position with respect to the fixing plate 250 coupled in one body with the second plate 120, the first plate 110 may be aligned in place with respect to the second plate 120. Specifically, by arranging the position of the first hole 115 formed in the first plate 110 on the basis of the edge that makes contact with the fixing plate 250 and by bringing the edge of the first plate 110 into contact with the fixing plate 250, the first hole 115 and the second hole 125 may be aligned.

As shown in Figs. 5 and 6, the battery measurement apparatus using X-rays in accordance with the present invention may further comprise an auxiliary pressing unit 300 for pressing the first plate 110 and the second plate 120 into close contact with the battery 11 in a position different from that of the pressing unit 200.For example, the pressing unit 200 may press the first plate 110 at one end side of the first plate 110, and the auxiliary pressing unit 300 may press the first plate 110 at the other end side of the first plate 110.

The auxiliary pressing unit 300 may comprise a second auxiliary plate 340 for making contact with the fourth face 123 of the second plate 120 and thereby supporting the second plate 120, a first auxiliary plate 330 facing the first face 111 of the first plate 110 on the first face 111 side, an auxiliary pressing means 310 for insertion into an auxiliary guide hole 331 provided in the first auxiliary plate 330 and for pressing the first plate 110 toward the battery 11, and a column portion 350 with one end thereof coupled to the first auxiliary plate 330 and the other end thereof coupled to the second auxiliary plate 340, for fixing the first auxiliary plate 330 and the second auxiliary plate 340 parallel to each other while being spaced apart from each other.

The first auxiliary plate 330 and the second auxiliary plate 340 may be parallel to each other and fixed to the column portion 350,and the coupled shape of the first auxiliary plate 330, the second auxiliary plate 340, and the column portion 350 may be a '□' shape as shown in Figs. 5 and 6. The first auxiliary plate 330, the first plate 110, the battery 11, the second plate 120, and the second auxiliary plate 340 may be stacked in this order, and of these, the first auxiliary plate 330, the second auxiliary plate 340, and the column portion 350 may be manufactured as one body. The auxiliary pressing unit 300 may have a separate body from the first plate 110, the second plate 120, and the pressing unit 200.Accordingly, the auxiliary pressing unit 300 may be freely detached from and coupled to the first plate 110 and the second plate 120.The coupling position of the auxiliary pressing unit 300 may be freely set according to the shape and size of the battery 11.

The auxiliary pressing means 310 may apply a force in a direction in which the first plate 110 moves closer to the second plate 120 in a state where the application point of the force for pressing is located on the first auxiliary plate 330.Therefore, the auxiliary guide hole 331 may also be formed to guide the auxiliary pressing means 310 in a direction perpendicular to the first battery face 11a.For example, the auxiliary pressing means 310 may be a bolt. Threads may be formed on the inner circumferential surface of the auxiliary guide hole 331, and the auxiliary pressing means 310 may be fastened to the auxiliary guide hole 331 by screw connection. Specifically, the auxiliary pressing means 310 may be coupled with the auxiliary guide hole 331 via screw connection by receiving a force with a torque wrench. The torque wrench may apply a force of 0 kgfcm to 10 kgfcm or lower or a force of 5 kgfcm to 6 kgfcm to the auxiliary pressing means 310, thereby coupling the auxiliary pressing means 310 and the auxiliary guide hole 331 via screw connection.

In other words, the auxiliary pressing means 310 may be inserted further into the auxiliary guide hole 331 as the auxiliary pressing means 310 rotates, the auxiliary pressing means 310 may extend from the face opposite to the face of the first auxiliary plate 330 into which the auxiliary pressing means 310 is inserted, and the extended end of the auxiliary pressing means 310 may press the first plate 110.

The separation distance between the first auxiliary plate 330 and the second auxiliary plate 340 may be 15 mm to 45 mm. The first plate 110, the second plate 120, and the battery 11 may be inserted between the first auxiliary plate 330 and the second auxiliary plate 340, and the distance between the first auxiliary plate 330 and the second auxiliary plate 340 may be determined in consideration of the thicknesses of the first plate 110, the second plate 120, and the battery 11.

One end of the pressing means 210 and one end of the auxiliary pressing means 310 may make contact with and press the first plate 110 at the same time. In other words, the first plate 110 may be pressed with two application points.

As shown in Fig. 3, an imaginary straight line connecting the point where the pressing means 210 makes contact with the first plate 110 and the point where the auxiliary pressing means 310 makes contact with the first plate 110 may pass through the first hole 115.By setting the pressing positions of the pressing means 210 and the auxiliary pressing means 310 in this way, it is possible to prevent the first plate 110 from being lifted from the battery 11 around the first hole 115.

The pressing means 210 and the auxiliary pressing means 310 may be coupled to the guide hole 231 and the auxiliary guide hole 331, respectively, via screw connection through a torque wrench, with a force of 3 kgfcm to 5 kgfcm if the battery 11 is of a mono-cell and with a force of 6 kgfcm to 7 kgfcm in the case of bicells.

While the ends of the pressing mean 210 and the auxiliary pressing means 310 exert a force on the first plate 110 at two points, the first plate 110 may receive the force from the pressing means 210 and the auxiliary pressing means 310 and press the entire surface area of the battery 10 corresponding to 2450 mm² to 2700 mm² with uniform pressure.

While the embodiments in accordance with the present invention have been described above, they are only for illustration and those having ordinary skill in the art to which the present invention pertains will appreciate that various modifications and equivalent embodiments can be made therefrom. Therefore, the true scope of the technical protection of the present invention should be defined by the following claims.

### INDUSTRICAL APPLICABILITY

The battery measurement apparatus using X-rays in accordance with the present invention can be applied to an X-ray measurement system, and more specifically, can be coupled to a battery to suppress changes in the battery due to the internal gas generated in the battery. In addition, the battery measurement apparatus using X-rays can press the battery by making contact with only one face and the other face opposite the one face of the battery, and therefore be coupled to the battery regardless of its size.

Since the battery measurement apparatus using X-rays in accordance with the present invention only needs to press the required area, it is possible to make contact with and press only part of the surface area of a battery. Therefore, even when a jig is coupled to the battery, the battery can still have exposed areas that are not coupled with the jig, and these exposed areas can be used to connect accessory parts such as a heat-insulating material, a heater, a charge and discharge terminal, and so on, for various analyses.

## Claims

1. A battery measurement apparatus using X-rays,
when one face of a battery (11) is defined as a first battery face (11a) and the other face of the battery (11) opposite the first battery face (11a) is defined as a second battery face (11b)"
the battery measurement apparatus comprising:
a first plate (110) for making contact with the first battery face (11a) and pressing the battery (11);
a second plate (120) for making contact with the second battery face (11b) and supporting the battery;
a pressing unit (200) for pressing the first plate(110) toward the second plate (120), wherein
the first plate (110) is provided with a first hole (115) formed therein through which X-rays pass,
the second plate (120) is provided with a second hole (125) formed therein through which X-rays pass, wherein the first hole (115) and the second hole (125) have a longitudinal width of 15 mm to 30 mm and a transverse width of 5 mm to 25 mm, and
the first hole (115) and the second hole (125) are formed at positions facing each other; and
an auxiliary pressing unit (300) for pressing the first plate (110) and the second plate (120) into close contact with the battery (11) in a position different from that of the pressing unit (200),
wherein when one face of the first plate (110) for making contact with the battery (11) is defined as a second face (113),
the other face of the first plate (110) opposite the second face (113) is defined as a first face (111),
one face of the second plate (120) for making contact with the battery (11) is defined as a third face (121), and
the other face of the second plate (120) opposite the third face is defined as a fourth face (123),
the pressing unit (200) comprises:
a pressing means (210) for pressing the first face (111) of the first plate (110) to thereby cause the second face (113) of the first plate (110) to press the battery (11);
a guide plate (230) positioned on first face (111) side of the first plate (110) and provided with a guide hole (231) into which the pressing means (210) is inserted and by which the pressing means (210) is guided, wherein a separation distance between the second plate (120) and the guide plate (230) is 10 mm to 30 mm; and
a fixing plate (250) with one end thereof coupled to the second plate (120) and the other end thereof coupled to the guide plate (230), for fixing the second plate (120) and the guide plate (230) parallel to each other while being spaced apart from each other,
**characterized in that**
the auxiliary pressing unit (300) has a separate body from the first plate (110), the second plate (120), and the pressing unit (200).

2. The battery measurement apparatus using X-rays of claim 1, wherein materials of the first plate (110) and the second plate (120) comprise one or more of Al and SUS, and
the first plate (110) and the second plate (120) have a thickness of 5 mm to 15 mm..

3. The battery measurement apparatus using X-rays of claim 1, wherein the first plate (110) is disposed between the guide plate (230) and the second plate (120) so that an edge of one end of the first plate (110) makes contact with a surface of the fixing plate (250).

4. The battery measurement apparatus using X-rays of claim 1, wherein the auxiliary pressing unit (300) comprises:
a second auxiliary plate (340) for making contact with the fourth face (123) of the second plate (120) and thereby supporting the second plate (120);
a first auxiliary plate (330) facing the first face (111) of the first plate (110) on the first face (111) side;
an auxiliary pressing means (310) for insertion into an auxiliary guide hole (331) provided in the first auxiliary plate (330) and for pressing the first plate (110) toward the battery (11); and
a column portion (350) with one end thereof coupled to the first auxiliary plate (330) and the other end thereof coupled to the second auxiliary plate (340), for fixing the first auxiliary plate (330) and the second auxiliary plate (340) parallel to each other while being spaced apart from each other.

5. The battery measurement apparatus using X-rays of claim 4, wherein a separation distance between the first auxiliary plate (330) and the second auxiliary plate (340) is 15 mm to 45 mm.

6. The battery measurement apparatus using X-rays of claim 4, wherein one end of the pressing means (210) and one end of the auxiliary pressing means (310) make contact with and press the first plate (110), and
an imaginary straight line connecting the point where the pressing means (210) makes contact with the first plate (110) and the point where the auxiliary pressing means (310) makes contact with the first plate (110) passes through the first hole (115).

7. The battery measurement apparatus using X-rays of claim 4, wherein
the guide plate (230), the second plate (120), and the fixing plate (250) are manufactured as one body; and
the first auxiliary plate (330), the second auxiliary plate (340), and the column portion (350) are manufactured as one body.

## Patentansprüche

1. Batterie-Messgerät unter Verwendung von Röntgenstrahlen,
wobei, wenn eine Fläche einer Batterie (11) als erste Batterieseite (11a) und die andere, der ersten Batterieseite (11a) gegenüberliegende Fläche der Batterie (11) als zweite Batterieseite (11b) definiert ist,
das Batterie-Messgerät aufweist:
eine erste Platte (110) zum Inkontaktkommen mit der ersten Batterieseite (11a) und zum Pressen auf die Batterie (11);
eine zweite Platte (120) zum Inkontaktkommen mit der zweiten Batterieseite (11b) und zum Tragen der Batterie;
eine Presseinheit (200) zum Pressen der ersten Platte (110) gegen die zweite Platte (120), wobei
die erste Platte (110) mit einem ersten darin ausgebildeten Loch (115) versehen ist, durch das Röntgenstrahlen hindurchgehen,
die zweite Platte (120) mit einem darin ausgebildeten zweiten Loch (125) versehen ist, durch das Röntgenstrahlen hindurchgehen, wobei das erste Loch (115) und das zweite Loch (125) eine Längsbreite von 15 mm bis 30 mm und eine Querbreite von 5 mm bis 25 mm haben, und
das erste Loch (115) und das zweite Loch (125) an einander gegenüberliegenden Positionen ausgebildet sind; und
eine Hilfspresseinheit (300) zum Pressen der ersten Platte (110) und der zweiten Platte (120) in engen Kontakt mit der Batterie (11) in einer Position, die von derjenigen der Presseinheit (200) verschieden ist,
wobei eine Fläche der ersten Platte (110) zum Inkontaktkommen mit der Batterie (11) als eine zweite Fläche (113) definiert ist,
die andere Fläche der ersten Platte (110) gegenüber der zweiten Fläche (113) als eine erste Fläche (111) definiert ist,
eine Fläche der zweiten Platte (120) zum Inkontaktkommen mit der Batterie (11) als eine dritte Fläche (121) definiert ist, und
die andere Seite der zweiten Platte (120), die der dritten Seite gegenüberliegt, als eine vierte Fläche (123) definiert ist,
die Presseinheit (200) umfasst:
ein Pressmittel (210) zum Pressen der ersten Fläche (111) der ersten Platte (110), um dadurch zu bewirken, dass die zweite Fläche (113) der ersten Platte (110) gegen die Batterie (11) presst;
eine Führungsplatte (230), die auf der Seite der ersten Fläche (111) der ersten Platte (110) positioniert ist und mit einem Führungsloch (231) versehen ist, in das die Presseinrichtung (210) eingeführt wird und durch das die Presseinrichtung (210) geführt wird, wobei ein Trennungsabstand zwischen der zweiten Platte (120) und der Führungsplatte (230) 10 mm bis 30 mm beträgt; und
eine Befestigungsplatte (250), deren eines Ende mit der zweiten Platte (120) und deren anderes Ende mit der Führungsplatte (230) verbunden ist, um die zweite Platte (120) und die Führungsplatte (230) parallel zueinander zu befestigen, während sie voneinander beabstandet sind,
**dadurch gekennzeichnet, dass**
die Hilfspresseinheit (300) einen von der ersten Platte (110), der zweiten Platte (120) und der Presseinheit (200) getrennten Körper aufweist.

2. Batterie-Messgerät unter Verwendung von Röntgenstrahlen nach Anspruch 1, wobei die Materialien der ersten Platte (110) und der zweiten Platte (120) eines oder mehrere von AI und SUS enthalten, und
die erste Platte (110) und die zweite Platte (120) eine Dicke von 5 mm bis 15 mm aufweisen.

3. Batterie-Messgerät unter Verwendung von Röntgenstrahlen nach Anspruch 1, wobei die erste Platte (110) zwischen der Führungsplatte (230) und der zweiten Platte (120) angeordnet ist, so dass ein Rand eines Endes der ersten Platte (110) mit einer Oberfläche der Befestigungsplatte (250) in Kontakt kommt.

4. Batterie-Messgerät unter Verwendung von Röntgenstrahlen nach Anspruch 1, wobei die Hilfspresseinheit (300) aufweist:
eine zweite Hilfsplatte (340) zum Inkontaktkommen mit der vierten Fläche (123) der zweiten Platte (120) und dadurch zum Tragen der zweiten Platte (120);
eine erste Hilfsplatte (330), die der ersten Fläche (111) der ersten Platte (110) auf der Seite der ersten Fläche (111) zugewandt ist;
ein Hilfspressmittel (310) zum Einsetzen in ein Hilfsführungsloch (331), das in der ersten Hilfsplatte (330) vorgesehen ist, und zum Pressen der ersten Platte (110) in Richtung der Batterie (11); und
einen Säulenabschnitt (350), dessen eines Ende mit der ersten Hilfsplatte (330) und dessen anderes Ende mit der zweiten Hilfsplatte (340) verbunden ist, um die erste Hilfsplatte (330) und die zweite Hilfsplatte (340) parallel zueinander zu befestigen, während sie voneinander beabstandet sind.

5. Batterie-Messgerät unter Verwendung von Röntgenstrahlen nach Anspruch 4, wobei der Abstand zwischen der ersten Hilfsplatte (330) und der zweiten Hilfsplatte (340) 15 mm bis 45 mm beträgt.

6. Batterie-Messgerät unter Verwendung von Röntgenstrahlen nach Anspruch 4, wobei ein Ende des Pressmittels (210) und ein Ende des Hilfspressmittels (310) die erste Platte (110) kontaktieren und pressen, und
eine imaginäre gerade Linie, die den Punkt, an welchem das Pressmittel (210) mit der ersten Platte (110) in Kontakt kommt, und den Punkt verbindet, an welchem das Hilfspressmittel (310) mit der ersten Platte (110) in Kontakt kommt, durch das erste Loch (115) verläuft.

7. Batterie-Messgerät unter Verwendung von Röntgenstrahlen nach Anspruch 4, wobei
die Führungsplatte (230), die zweite Platte (120) und die Befestigungsplatte (250) als ein Körper hergestellt sind; und
die erste Hilfsplatte (330), die zweite Hilfsplatte (340) und der Säulenabschnitt (350) als ein Körper hergestellt sind.

## Revendications

1. Appareil de mesure de batterie utilisant des rayons X,
une face d'une batterie (11) étant définie comme une première face de batterie (1 1a), et l'autre face de la batterie (11), située à l'opposé de la première face de batterie (11a), étant définie comme une deuxième face de batterie (11b),
l'appareil de mesure de batterie comprenant :
une première plaque (110) établissant un contact avec la première face de batterie (11a) et appuyant sur la batterie (11) ;
une deuxième plaque (120) établissant un contact avec la deuxième face de batterie (11b), et soutenant la batterie ;
une unité de pression (200) pressant la première plaque (110) vers la deuxième plaque (120),
la première plaque (110) étant munie d'un premier orifice (115), agencé dans celle-ci, par lequel passent des rayons X,
la deuxième plaque (120) étant munie d'un deuxième orifice (125), agencé dans celle-ci, par lequel passent des rayons X, le premier orifice (115) et le deuxième orifice (125) mesurant de 15 mm à 30 mm de largeur longitudinale, et de 5 mm à 25 mm de largeur transversale, et
le premier orifice (115) et le deuxième orifice (125) étant agencés dans des positions se faisant face ; et
une unité de pression auxiliaire (300) pour presser la première plaque (110) et la deuxième plaque (120) en contact étroit avec la batterie (11) dans une position différente de celle de l'unité de pression (200),
une face de la première plaque (110) établissant un contact avec la batterie (11) étant définie comme une deuxième face (113),
l'autre face de la première plaque (110) située à l'opposé de la deuxième face (113) étant définie comme une première face (111),
une face de la deuxième plaque (120) établissant un contact avec la batterie (11) étant définie comme une troisième face (121), et
l'autre face de la deuxième plaque (120), située à l'opposé de la troisième face, étant définie comme une quatrième face (123),
l'unité de pression (200) comprenant :
un dispositif de pression (210) pressant la première face (111) de la première plaque (110), en donnant lieu ainsi à la pression exercée sur la batterie (11) par la deuxième face (113) de la première plaque (110) ;
une plaque de guidage (230) positionnée sur le côté de la première face (111) de la première plaque (110), et dotée d'un orifice de guidage (231) dans lequel est inséré le dispositif de pression (210), et par lequel le dispositif de pression (210) est guidé, une distance de séparation entre la deuxième plaque (120) et la plaque de guidage (230) mesurant de 10 mm à 30 mm ; et
une plaque de fixation (250) dont un bout est couplé à la deuxième plaque (120), et l'autre bout est couplé à la plaque de guidage (230), fixant la deuxième plaque (120) et la plaque de guidage (230) parallèlement entre elles, tout en étant espacées l'une de l'autre,
**caractérisé en ce que**
l'unité de pression auxiliaire (300) possède un corps distinct de première plaque (110), de la deuxième plaque (120), et de l'unité de pression (200).

2. Appareil de mesure de batterie utilisant des rayons X selon la revendication 1, les matériaux de la première plaque (110) et de la deuxième plaque (120) comprenant un ou plusieurs de l'Al et du SUS, et
la première plaque (110) et de la deuxième plaque (120) mesurant de 5 mm à 15 mm d'épaisseur.

3. Appareil de mesure de batterie utilisant des rayons X selon la revendication 1, la première plaque (110) étant disposée entre la plaque de guidage (230) et la deuxième plaque (120), de sorte qu'un bord d'un bout de la première plaque (110) établisse un contact avec une surface de la plaque de fixation (250).

4. Appareil de mesure de batterie utilisant des rayons X selon la revendication 1, l'unité de pression auxiliaire (300) comprenant :
une deuxième plaque auxiliaire (340) établissant un contact avec la quatrième face (123) de la deuxième plaque (120), en soutenant ainsi la deuxième plaque (120) ;
une première plaque auxiliaire (330) située à l'opposé de la première face (111) de la première plaque (110) sur le côté de la première face (111) ;
un dispositif de pression auxiliaire (310) s'insérant dans un orifice de guidage auxiliaire (331) pratiqué dans la première plaque auxiliaire (330), et pressant la première plaque (110) vers la batterie (11) ; et
une partie de colonne (350) dont un bout est couplé à la première plaque auxiliaire (330), et l'autre bout est couplé à la deuxième plaque auxiliaire (340), pour fixer la première plaque auxiliaire (330) et la deuxième plaque auxiliaire (340) parallèlement entre elles, tout en étant espacées l'une de l'autre.

5. Appareil de mesure de batterie utilisant des rayons X selon la revendication 4, une distance de séparation entre la première plaque auxiliaire (330) et la deuxième plaque auxiliaire (340) mesurant de 15 mm à 45 mm.

6. Appareil de mesure de batterie utilisant des rayons X selon la revendication 4, un bout du dispositif de pression (210) et un bout du dispositif de pression auxiliaire (310) établissant le contact avec la première plaque (110) et appuyant sur celle-ci, et
une ligne droite imaginaire, reliant le point où le dispositif de pression (210) établit un contact avec la première plaque (110) et le point où le dispositif de pression auxiliaire (310) établit un contact avec la première plaque (110), passant à travers le premier orifice (115).

7. Appareil de mesure de batterie utilisant des rayons X selon la revendication 4,
la plaque de guidage (230), la deuxième plaque (120), et la plaque de fixation (250) étant fabriquées comme un corps unique ; et
la première plaque auxiliaire (330), la deuxième plaque auxiliaire (340), et la partie de colonne (350) étant fabriquées comme un corps unique.
